# EUROPÄISCHE PATENTSCHRIFT

(11) **EP 2 197 718 B1**
(45) Veröffentlichungstag und Bekanntmachung des Hinweises auf die Patenterteilung: **12.04.2017**
(21) Anmeldenummer: 08784934.5
(22) Anmeldetag: 22.07.2008
(51) Int. Cl.: B60T 13/26

(54) **ELEKTROPNEUMATISCHER FESTSTELLBREMSMODULATOR FÜR ANHÄNGEFAHRZEUG IN EINEM FAHRZEUGZUG**
ELECTROPNEUMATIC PARKING BRAKE MODULATOR FOR CONTROLLING A PARKING BRAKE MODE OF BRAKES OF A TRAILER IN A VEHICLE/TRAILER COMBINATION
MODULATEUR DE FREINAGE DE STATIONNEMENT ÉLECTROPNEUMATIQUE POUR LA COMMANDE D'UNE FONCTION DE FREINAGE DE STATIONNEMENT DE FREINS D'UN VÉHICULE TRACTÉ DANS UN TRAIN DE VÉHICULES

(30) Priorität: 05.10.2007 DE 102007047691
(43) Veröffentlichungstag der Anmeldung: 23.06.2010
(73) Patentinhaber: WABCO GmbH, 30453 Hannover (DE)
(72) Erfinder: FÖRSTER, Henning, 31171 Nordstemmen (DE); HELMER, Jörg, 88267 Vogt (DE); STRACHE, Wolfgang, 30966 Hemmingen (DE)
(74) Vertreter: Lauerwald, Jörg
(86) Internationale Anmeldenummer: PCT/EP2008/005969
(87) Internationale Veröffentlichungsnummer: WO 2009/046780

(56) Entgegenhaltungen:
- EP-A- 1 022 204
- US-A- 4 586 584
- US-A- 5 046 786
- US-A- 5 061 015
- US-A1- 2004 187 674

## Beschreibung

Die Erfindung betrifft einen elektropneumatischen Feststellbremsmodulator zur Steuerung einer Feststellbremsfunktion von Bremsen wenigstens eines Anhängefahrzeugs in einem Zugfahrzeug, bestehend aus dem Zugfahrzeug und einem Anhängefahrzeug gemäß dem Oberbegriff von Anspruch 1.

Feststellbremsmodulatoren werden in pneumatischen bzw. elektropneumatischen Bremsanlagen verbaut. Ein Feststellbremsmodulator weist Ventile auf, mittels derer ein pneumatischer Druck aussteuerbar und zum Lösen einer Feststellbremse bereitstellbar ist. Hierzu sind zum Betätigen von Bremsen an einem Fahrzeug herkömmlicherweise kombinierte Federspeicher-/Membranbremszylinder verbaut. Ein kombinierter Federspeicher-/Membranbremszylinder unterscheidet sich dadurch von einem einfachen Bremszylinder, welcher lediglich zum Betätigen einer Betriebsbremse dient, dass er neben einem Membranteil für die Betriebsbremse einen Federspeicherteil für die Feststellbremse aufweist, wobei die Feststellbremse im unbelüfteten Zustand des Federspeicherteils eingelegt ist und im belüfteten Zustand des Federspeicherteils gelöst ist, sofern nicht der Membranteil des Federspeicher-/Membranbremszylinders belüftet ist.

Als Betriebsbremse und Feststellbremse werden vorliegend die Betriebsbremsfunktion und die Feststellbremsfunktion einer oder mehrerer Bremsen bezeichnet. Die Betriebsbremse und die Feststellbremse können von derselben Bremse realisiert sein, wenn diese Bremse über beide Funktionalitäten, d.h. eine Betriebsbremsfunktion und eine Feststellbremsfunktion verfügt.

Im Fahrbetrieb des Fahrzeugs werden die Federspeicherteile der kombinierten Federspeicher-/Membranbremszylinder mittels des Feststellbremsmodulators belüftet bzw. ein Luftdruck in den Federspeicherteilen der Federspeicher-/Membranbremszylinder gehalten. Zum Einlegen der Feststellbremse sind die Federspeicherteile der kombinierten Federspeicher-/Membranbremszylinder mittels des Feststellbremsmodulators entlüftbar.

An einem Ausgang stellt der Feststellbremsmodulator einen ausgesteuerten Vorratsdruck für das Anhängefahrzeug bereit. Wenn die Bremsen des Anhängefahrzeugs über kombinierte Federspeicher-/Membranbremszylinder verfügen, sind die Federspeicherteile dieser kombinierten Federspeicher-/Membranbremszylinder mit dem für das Anhängefahrzeug ausgesteuerten vom Feststellbremsmodulator bereitgestellten Vorratsdruck belüftbar und entlüftbar. Bei einem Abfall des Vorratsdrucks am Anhängefahrzeug ist infolge dessen eine Feststellbremse am Anhänger automatisch einlegbar.

Ein Zugfahrzeug in einem Fahrzeugzug weist regelmäßig ein Zugwagenschutzventil auf. Mittels des Zugwagenschutzventils ist eine Druckluftleitung, welche einen ausgesteuerten Druck für die Betriebsbremse des Anhängefahrzeugs bereitstellt, automatisch absperrbar, wenn der für das Anhängefahrzeug bereitgestellte Vorratsdruck unter einen vorbestimmten Schwellenwert abfällt. Hierzu wird üblicherweise ein pneumatisches Halten-Ventil verwendet. Ohne ein derartiges Halten-Ventil würde bspw. eine undichte Druckluftleitung, welche einem Anhängefahrzeug einen ausgesteuerten Betriebsbremsdruck bereitstellt, nicht nur ein Versagen der Betriebsbremsfunktion des Anhängefahrzeugs bewirken. Vielmehr würde auch der ausgesteuerte Druck für die Betriebsbremse des Zugfahrzeugs abfallen. Infolge dessen würde auch das Zugfahrzeug nicht mehr wie gewünscht abbremsbar sein.

Das Zugwagenschutzventil verhindert ein Abfallen des ausgesteuerten Luftdrucks für die Betriebsbremse des Zugfahrzeugs bei einem Druckabfall des ausgesteuerten Luftdrucks für den Vorratsdruck des Anhängefahrzeugs. Hierbei wird davon ausgegangen, dass Druckluft ggf. sowohl aus der Druckluftleitung, welche dem Anhängefahrzeug Druckluft für die Betriebsbremse bereitstellt, als auch aus der Druckluftleitung, welche dem Anhängefahrzeug einen ausgesteuerten Vorratsdruck bereitstellt, entweicht. Dies ist bspw. dann der Fall, wenn sich das Anhängefahrzeug vom Zugfahrzeug löst und dabei beide Druckluftleitungen, welche das Zugfahrzeug und das Anhängefahrzeug verbinden, abreißen.

Die Druckluftleitung, welche dem Anhängefahrzeug einen Vorratsdruck bereitstellt, ist dann ggf. durch ein automatisch oder manuell betätigbares Ventil vom Druckluftvorrat des Zugfahrzeugs absperrbar.

Die bekannte aufgelöste Bauweise von Feststellbremsmodulator und Zugwagenschutzventil hat den Nachteil, dass das Zugwagenschutzventil und wenigstens eine das Zugwagenschutzventil mit dem Feststellbremsmodulator verbindende Druckluftleitung neben dem Feststellbremsmodulator separat verbaut werden müssen. Dies führt zu höheren Kosten bei der Fertigung der Komponenten und beim Einbau der Komponenten und zu einer höheren Störanfälligkeit aufgrund der hohen Zahl der Druckluftleitungen, welche undicht werden können. Hieraus resultieren höhere Kosten bei Wartung und Reparatur sowie höhere Kosten aufgrund von Ausfallzeiten des Fahrzeugs während der Reparatur.

US 2004/01876 74 A1 offenbart ein elektropneumatisch verriegelndes Ventilsystem, das eine elektrische Schalteinheit hat, die des Weiteren einen Anwendungs-Schalter oder einen Aktivieren-Schalter und einen Deaktivieren-Schalter oder einen Freigabe-Schalter und eine Stromversorgung umfasst. Ein erstes Magnetventil ist in der elektrischen Kommunikation mit dem Aktivieren-Schalter und ein zweites Magnetventil ist in der elektrischen Kommunikation mit dem Deaktivieren-Schalter. Ein pneumatisch verriegelndes Ventil ist in der pneumatischen Kommunikation mit dem ersten und zweiten Magnetventil und eine Druckluftquelle ist in der pneumatischen Kommunikation mit dem pneumatisch verriegelnden Ventil und den Magnetventilen.

US 5,061,015 offenbart ein elektropneumatisches Untersystem eines Fahrzeugsdruckluftsystems das die Kommunikation mit der Anhängersteuerleitung, der Anhänger-Versorgungsleitung und der Leitung für die Zuführung zum Federspeicherbremszylinder der Zugmaschine steuert. Ein Ventil, das durch Vorsteuerdruck betätigt wird, ist in der Anhängersteuerleitung installiert, um eine Zugmaschinen-Schutzfunktion zur Verfügung zu stellen. Ein Magnetventil in der Anhänger-Versorgungsleitung wird durch eine elektronische Steuereinheit betätigt und die Anhänger-Versorgungsleitung schließt, um die Zugmaschinen-Schutzfunktion durchzuführen.

Der Erfindung liegt daher das Problem zugrunde, einen kosteneffizientere Feststellbremseinrichtung der vorstehend genannten Art bereitzustellen.

Die Erfindung löst dieses Problem durch die im Patentanspruch 1 angegebenen Merkmale.

Die Erfindung hat erkannt, dass auf ein eigenständiges Zugwagenschutzventil, durch welches ein für das Anhängefahrzeug bereitgestellter Steuerdruck zum Betätigen der Betriebsbremse des Anhängers bei einem Druckabfall des für das Anhängefahrzeug bereitgestellten Vorratsdrucks unter einen vorbestimmten Schwellenwert absperrbar ist, verzichtet werden kann, wenn das Zugwagenschutzventil in den Feststellbremsmodulator integriert ist, und dass die zusammengefasste Bauweise die Störanfälligkeit verringert und Kosten spart. Es verringert sich nämlich der Materialaufwand eines in den Feststellbremsmodulator integrierten Zugwagenschutzventils gegenüber einem eigenständig verbauten Zugwagenschutzventil. Es verringert sich zudem die Anzahl der Drucklufteingänge und Druckluftausgänge außerhalb des Feststellbremsmodulators sowie die Anzahl der Druckluftleitungen, welche an die Drucklufteingänge und an die Druckluftausgänge angeschlossen sind. Insbesondere ist keine außerhalb des Feststellbremsmodulators liegende Druckluftleitung zur Verbindung des Feststellbremsmodulators mit dem Zugwagenschutzventil mehr vorzusehen.

Für die Integration des Zugwagenschutzventils in den Feststellbremsmodulator ist es notwendig, am Feststellbremsmodulator wenigstens einen Druckluftsteuereingang sowie einen Druckluftsteuerausgang für einen ausgesteuerten Betriebsbremsdruck für das Anhängefahrzeug vorzusehen. Die Erfindung hat jedoch erkannt, dass sich hierdurch die Anzahl der Drucklufteingänge und der Druckluftausgänge außerhalb des Feststellbremsmodulators im Vergleich zu einer aufgelösten Bauweise nicht erhöht, da bei der aufgelösten Bauweise das Zugwagenschutzventil einen Drucklufteingang und einen Druckluftausgang außerhalb des Feststellbremsmodulators zum Anschluss von Druckluftleitungen für den ausgesteuerten Betriebsbremsdruck für das Anhängefahrzeug aufweisen müsste. Diese Drucklufteingänge und Druckluftausgänge sind bei der Erfindung in den Feststellbremsmodulator integriert.

In einer Ausgestaltung der Erfindung ist ein pneumatisches Halten-Ventil in den Feststellbremsmodulator integriert. Dieses Halten-Ventil übernimmt die Funktion des Zugwagenschutzventils, indem es mit dem für das Anhängefahrzeug bereitgestellten Vorratsdruck schaltbar ist und indem durch ein Schalten des Halten-Ventils die Druckluftleitung, welche einen Steuerdruck für die Bremsen des Anhängefahrzeugs bereitstellt, zum Druckluftsteuerausgang des Feststellbremsmodulators absperrbar ist.

Das Halten-Ventil ist ein kostengünstiges Ventil, welches wenigstens zwei Zustände einnehmen kann. Es ist pneumatisch schaltbar. Das Halten-Ventil wechselt von einem durchleitenden zu einem absperrenden Zustand, wenn der als Schaltdruck verwendete Vorratsdruck für das Anhängefahrzeug unter einen vorbestimmten Grenzwert fällt. Dieser Grenzwert ergibt sich aus einer Federspannung, welche dem pneumatischen Druck zum Schalten des Halten-Ventils entgegenwirkt.

In einer vorteilhaften Weiterbildung des Feststellbremsmodulators ist auch die Vorratsdruckleitung zum Anhängefahrzeug bei einem Druckabfall unter einen vorbestimmten Schwellenwert im Feststellbremsmodulator automatisch von dem vom Zugfahrzeug bereitgestellten Vorratsdruck absperrbar. Hierdurch kann auf ein manuell betätigbares Ventil zum Absperren des Vorratsdrucks für das Anhängefahrzeug verzichtet werden. Ein automatisches Absperren ist zudem vorteilhaft, da es sehr zeitnah nach einem Druckabfall vornehmbar ist. Somit kann ein Druckverlust in den Druckluftvorratsbehältern des Zugfahrzeugs weitgehend vermieden werden, wenn es zu einem unerwünschten Druckabfall des für den Anhänger bereitgestellten Vorratsdrucks kommt. Insbesondere nach einem Leitungsabriss der Druckluftleitungen zum Anhängefahrzeug sind folglich diese beiden Druckluftleitungen schnell automatisch absperrbar. Ventile im Feststellbremsmodulator sind dabei derart ausgebildet, dass im unbestromten Zustand der für das Anhängefahrzeug bereitgestellte Vorratsdruck ebenfalls vom Druckluftvorrat des Zugfahrzeugs absperrbar ist.

In einer abweichenden Ausgestaltung des erfindungsgemäßen Feststellbremsmodulators erfolgt das Absperren des für das Anhängefahrzeug bereitgestellten Vorratsdrucks vom Druckluftvorrat des Zugfahrzeugs nicht mittels elektromagnetischer Ventile sondern pneumatisch. Dann ist ein Ventil infolge eines niedrigen Druckes in der abzusperrenden Druckluftleitung oder infolge einer hohen Strömungsgeschwindigkeit der Druckluft zum Abtrennen dieser Druckluftleitung automatisch pneumatisch schaltbar.

Vorteilhafterweise ist die Druckluftvorratsleitung zum Anhängefahrzeug vom Druckluftvorrat des Zugfahrzeugs mittels elektromagnetischer Ventile im Feststellbremsmodulator absperrbar. Zum automatischen Absperren bei einem unerwarteten Druckabfall, ist dieser Druckabfall feststellbar. Hierfür bedarf es wenigstens eines Drucksensors. Ggf. ist noch wenigstens ein weiterer Messwert, welcher den Fahrzeugzustand kennzeichnet, heranziehbar. Entscheidend hierbei ist, dass zwischen einem Druckabfall während eines Bremsvorgangs aufgrund dieses Bremsvorgangs und einem Druckabfall aufgrund eines Abreißens der Vorratsdruckleitung zum Anhängefahrzeug oder einem Leck in dieser Vorratsdruckleitung unterschieden werden kann. Ein den Fahrzeugzustand während eines Bremsvorgangs kennzeichnender Wert ist bspw. ein Bremsanforderungssignal, ein Messwert eines Beschleunigungssensors oder ein Messwert eines Drehzahlsensors an einem Rad des Fahrzeugs.

Vorteilhafterweise ist ein Druckabfall in der Vorratsdruckleitung zum Anhängefahrzeug nicht allein anhand eines einzigen Messwertes feststellbar. Ein Druckabfall kann nämlich schneller anhand eines zeitlichen und/oder örtlichen Druckgradienten festgestellt werden. Ein zeitlicher Druckgradient ist dabei aus wenigstens zwei Messwerten ermittelbar, welche zu unterschiedlichen Zeitpunkten genommen werden. Diese Messwerte können dabei Messwerte eines einzigen Drucksensors aber auch die Messwerte mehrerer Drucksensoren sein. Ein örtlicher Druckgradient ist anhand von Messwerten von wenigstens zwei Drucksensoren ermittelbar. Ein Drucksensor befindet sich dabei vorteilhafterweise nahe an einem den Vorratsdruck für das Anhängefahrzeug bereitstellenden Druckluftvorratsausgang des Feststellbremsmodulators. Von einem zweiten Drucksensor ist dabei vorteilhafterweise der Vorratsdruck nahe an einem Druckluftvorratseingang des Feststellbremsmodulators für den Vorratsdruck messbar. Kommt es nun zu einem plötzlichen Druckabfall des Vorratsdrucks für das Anhängefahrzeug, dann ist dies in sehr kurzer Zeit sowohl anhand des örtlichen Druckgradienten als auch anhand des zeitlichen Druckgradienten feststellbar. Wenigstens einer dieser Druckgradienten ist deshalb für die Entscheidung, ob ein Ventil zum Absperren der Druckluftvorratsleitung betätigt werden soll, vorteilhafterweise heranziehbar.

Die Ermittlung eines Druckabfalls über einen Gradienten hat den Vorteil, dass ein unvorhergesehener Druckabfall viel schneller feststellbar ist, als dies bei einfacher Betrachtung eines einzelnen Messwertes und Vergleich dieses Messwertes mit einem Referenzwert möglich ist. Es kann folglich verhindert werden, dass unnötig viel Druckluft aus den Druckluftvorratsbehältern des Zugfahrzeugs entweicht, wenn Druckluft über den Ausgang für den für das Anhängefahrzeug bereitgestellten Vorratsdruck entweicht.

In einer vorteilhaften Weiterbildung des Feststellbremsmodulators wird der Steuerdruck für das Anhängefahrzeug nicht allein deshalb dem Feststellbremsmodulator an wenigstens einem Druckluftsteuereingang bereitgestellt, um ihn mittels des Zugwagenschutzventils zum Anhängefahrzeug hin absperren zu können. Vielmehr ist der Steuerdruck nun im Feststellbremsmodulator modulierbar. Insbesondere ist der dem Anhängefahrzeug bereitgestellte Steuerdruck gegenüber dem an einem Druckluftsteuereingang des Feststellbremsmodulators vorliegenden Steuerdruck hinaus erhöhbar. Hierbei ist auch bei nicht betätigter Betriebsbremse des Fahrzeugs die Betriebsbremse des Anhängefahrzeugs mittels des Feststellbremsmodulators betätigbar. Eine zumindest temporäre Feststellbremsfunktion am Anhängefahrzeug ist somit über die Betriebsbremse des Anhängefahrzeugs herstellbar. Zudem ist während eines Bremsvorgangs ein ausgesteuerter Bremsdruck erhöhbar. Das Anhängefahrzeug ist damit stärker abbremsbar als das Zugfahrzeug. Somit ist mittels des Feststellbremsmodulators eine Streckbremse bereitstellbar. Eine derartige Streckbremse dient dazu, einen Fahrzeugzug auf Gefällstrecken gestreckt zu halten. Ferner ist sie vorteilhaft bei glatten Fahrbahnen einsetzbar und dient zum Testen der Bremswirkung des Anhängefahrzeugs oder zum Prüfen der Verbindung des Zugfahrzeugs zum Anhängefahrzeug.

Vorteilhafterweise ist der dem Anhängefahrzeug bereitgestellte Steuerdruck immer mindestens so hoch wie der am Druckluftsteuereingang des Feststellbremsmodulators anliegende Steuerdruck. Ein im Feststellbremsmodulator modulierter Steuerdruck sollte den für das Anhängefahrzeug bereitgestellten Steuerdruck gegenüber dem am Druckluftsteuereingang des Feststellbremsmodulators anliegenden Steuerdruck ggf. erhöhen aber nicht erniedrigen können. Es muss nämlich sichergestellt sein, dass der Anhänger nicht zu schwach im Verhältnis zum Zugfahrzeug abbremst. Ein zu schwaches Abbremsen des Anhängefahrzeugs könnte nämlich zu einem Ausbrechen des Zugfahrzeuges während einer starken Bremsung führen.

Im Feststellbremsmodulator ist deshalb ein sogenanntes Select-High-Ventil verbaut, das von dem am Druckluftsteuereingang des Feststellbremsmodulators anliegenden Steuerdruck und einem im Feststellbremsmodulator modulierten Druck den Höheren der beiden auswählt und dem Anhängefahrzeug als Steuerdruck bereitstellt.

Ein modulierter Druck ist dabei mittels wenigstens eines Ventils aussteuerbar und von diesem Ventil bereitstellbar. Dabei ist der modulierte Druck mittels dieses Ventils bis auf einen Vorratsdruck des Zugfahrzeugs erhöhbar. In einem anderen Zustand dieses Ventils ist der Druck in der Druckluftleitung, welche dieses Ventil mit dem Select-High-Ventil verbindet, konstanthaltbar. In diesem Zustand ist mit diesem konstant gehaltenen Druck ein Mindestdruck für den Steuerdruck des Anhängefahrzeugs vorgegeben, der auch bei geringerem Steuerdruck am Druckluftsteuereingang des Feststellbremsmodulators nicht unterschritten wird. In einer weiteren Schaltstellung des Ventils ist die Druckluftleitung von diesem Ventil zum Select-High-Ventil entlüftbar. Im entlüfteten Zustand der Druckluftleitung ist der dem Anhänger bereitgestellte Steuerdruck wieder gleich dem am Eingang des Feststellbremsmodulators anliegenden Steuerdruck.

In einer vorteilhaften Ausführungsform ist das Ventil, mittels dessen der für das Anhängefahrzeug bereitgestellte Steuerdruck erhöhbar ist, das gleiche Ventil, mittels dessen der Vorratsdruck für das Anhängefahrzeug modulierbar ist. Dann dient dieses Ventil zur Modulation sowohl des dem Anhänger bereitgestellten Steuerdrucks als auch des dem Anhänger bereitgestellten Vorratsdrucks. Vorteilhaft hierbei ist, dass zwei Druckluftleitungen über ein Ventil entlüftbar sind und zum Entlüften dieser beiden Druckluftleitungen lediglich ein Entlüftungsauslass vorgesehen sein muss. Dann wird zwar regelmäßig noch ein weiteres Ventil zum Umschalten zwischen diesen beiden Druckluftleitungen benötigt, doch ist dieses weitere Ventil günstiger als ein zweites Ventil zum Modulieren eines Druckes.

Weitere vorteilhafte Ausführungsformen ergeben sich aus den Unteransprüchen sowie aus den anhand der beigefügten Zeichnung näher erläuterten Ausführungsbeispielen. In der Zeichnung zeigt:
- Fig. 1: einen Ausschnitt einer Druckluftbremsanlage mit einem Feststellbremsmodulator und darin integriertem Zugwagenschutzventil in vereinfachter schematischer Darstellung gemäß einem ersten Ausführungsbeispiel der Erfindung;
- Fig. 2: einen Ausschnitt einer Druckluftbremsanlage mit einem Feststellbremsmodulator und darin integriertem Zugwagenschutzventil in vereinfachter schematischer Darstellung gemäß einem zweiten Ausführungsbeispiel der Erfindung;
- Fig. 3: einen Ausschnitt einer Druckluftbremsanlage mit einem Feststellbremsmodulator mit Möglichkeit der Modulation des Anhängersteuerdrucks und integriertem Zugwagenschutzventil in vereinfachter schematischer Darstellung gemäß einem dritten Ausführungsbeispiel der Erfindung;
- Fig. 4: einen Ausschnitt einer Druckluftbremsanlage mit einem Feststellbremsmodulator mit Möglichkeit der Modulation des Anhängersteuerdrucks und integriertem Zugwagenschutzventil in vereinfachter schematischer Darstellung gemäß einem vierten Ausführungsbeispiel der Erfindung;
- Fig. 5: einen Ausschnitt einer Druckluftbremsanlage mit einem Feststellbremsmodulator mit Möglichkeit der Modulation des Anhängersteuerdrucks und integriertem Zugwagenschutzventil in vereinfachter schematischer Darstellung gemäß einem fünften Ausführungsbeispiel der Erfindung und
- Fig. 6: eine Druckluftbremsanlage mit einem Feststellbremsmodulator und darin integriertem Zugwagenschutzventil in vereinfachter schematischer Darstellung gemäß einem sechsten Ausführungsbeispiel der Erfindung.

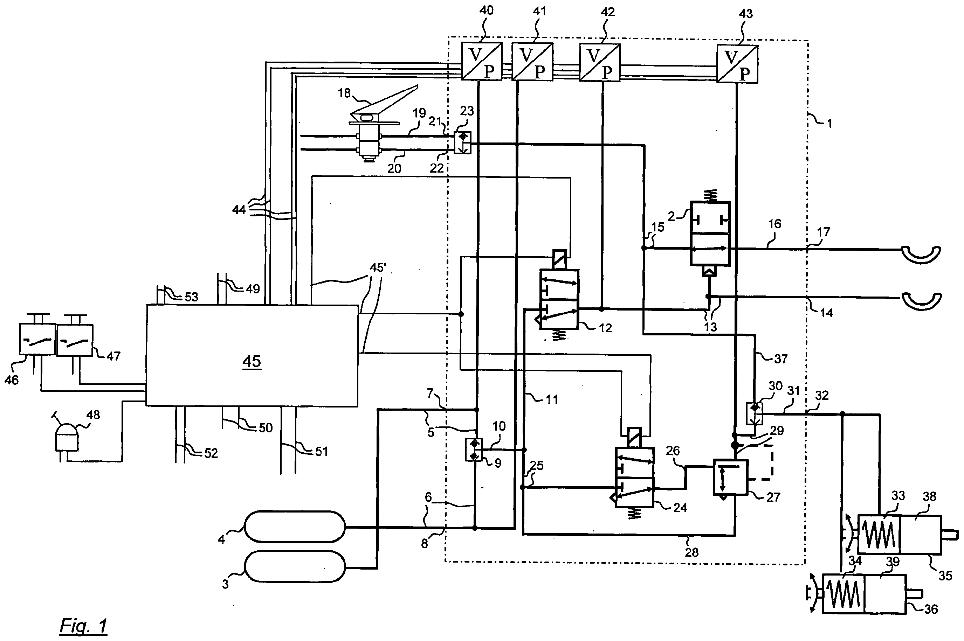

Fig. 1 zeigt schematisch einen Teil einer Druckluftbremsanlage für einen Fahrzeugzug. Insbesondere zeigt sie einen Feststellbremsmodulator 1 mit darin integriertem Halten-Ventil 2. Von einem ersten Druckluftvorratsbehälter 3 und einem zweiten Druckluftvorratsbehälter 4 ist über Druckluftleitungen 5 und 6 und Druckluftvorratseingänge 7 und 8 des Feststellbremsmodulators 1 Druckluft aus dem ersten Druckluftvorratsbehälters 3 und Druckluft aus dem zweiten Druckluftvorratsbehälter 4 dem Feststellbremsmodulator 1 bereitstellbar. Im Feststellbremsmodulator 1 gibt ein Doppelrückschlagventil 9 den höheren der Drücke in den Druckluftleitungen 5 und 6 an eine Druckluftleitung 10. Gleichzeitig verhindert das Doppelrückschlagventil 9 ein Entweichen von Druckluft im Feststellbremsmodulator 1 über die Druckluftvorratseingänge 7 und 8.

Die Druckluftleitung 10 ist über eine Druckluftleitung 11 mit einem elektromagnetischen Ventil 12 verbunden. Mittels dieses elektromagnetischen Ventils 12 ist über eine Druckluftleitung 13 und einen Druckluftvorratsausgang 14 ein Vorratsluftdruck einem Anhängefahrzeug bereitstellbar. Hierfür ist das elektromagnetische Ventil 12 zu bestromen. Im unbestromten Zustand des elektromagnetischen Ventils 12 sind die Druckluftleitungen 11 und 13 voneinander getrennt. Die Druckluftleitung 13 ist über das elektromagnetische Ventil 12 im unbestromten Zustand entlüftbar. Über die Druckluftleitung 13 ist das Halten-Ventil 2, welches ein pneumatisches Ventil ist, pneumatisch betätigbar. Im belüfteten Zustand der Druckluftleitung 13, d.h. wenn ein Anhängefahrzeug an ein Zugfahrzeug, welches den Feststellbremsmodulator aufweist, angekoppelt und der Luftdruckvorrat des Anhängefahrzeugs über die Druckluftleitung 13 belüftet ist, verbindet das Halten-Ventil 2 Druckluftleitungen 15 und 16. Über die Druckluftleitung 16 ist dann an einem Druckluftsteuerausgang 17 ein ausgesteuerter Luftdruck zum Betätigen der Betriebsbremsfunktion des Anhängefahrzeugs bereitstellbar.

Von einer Bremspedaleinrichtung 18 ist in zwei Druckluftleitungen 19 und 20 ein pneumatischer Druck aussteuerbar. Die mit diesem Druck ausgesteuerte Druckluft gelangt über Druckluftsteuereingänge 21 und 22 des Feststellbremsmodulators 1 an ein sog. Select-High-Ventil 23, d.h. ein Wechselventil mit Rückströmung. Mittels des Select-High-Ventils 23 ist die Druckluftleitung 15 mit dem höheren der Drücke der Druckluftleitungen 19 und 20 beaufschlagbar. Folglich gelangt bei belüfteter Druckluftleitung 13 der höhere der Drücke an den Druckluftsteuereingängen 21 und 22 an den Druckluftsteuerausgang 17. Bei Abfall des Luftdrucks in der Druckluftleitung 13 bzw. am Druckluftvorratsausgang 14 unter einen vorbestimmten Schwellenwert ist die Verbindung zwischen dem Druckluftsteuerausgang 17 bzw. der Druckluftleitung 16 und der Druckluftleitung 15 und damit den Druckluftsteuereingängen 21 und 22 absperrbar. Bei einem Abreißen des Anhängers werden normalerweise beide Druckluftleitungen 13 und 16 über den Druckluftvorratsausgang 14 und den Druckluftsteuerausgang 17 entlüftet. Bei entlüfteter Druckluftleitung 13 wechselt das Halten-Ventil 2 in den Zustand, in welchem die Druckluftleitung 15 von der Druckluftleitung 16 getrennt ist. Folglich kann ausgesteuerte Druckluft in den Druckluftleitungen 19 und 20, die über die Druckluftsteuereingänge 21 und 22 dem Feststellbremsmodulator 1 bereitstellbar ist, dann nicht über das Halten-Ventil 2, die Druckluftleitung 16 und den Druckluftsteuerausgang 17 entweichen.

Der Feststellbremsmodulator 1 weist ferner Einrichtungen zum Lösen der Feststellbremse, d.h. Deaktivieren der Feststellbremsfunktion im Zugfahrzeug auf. Hierzu ist ein elektromagnetisches Ventil 24 über eine Druckluftleitung 25, die Druckluftleitung 10, das Doppelrückschlagventil 9 und die Druckluftleitungen 5 und 6 mit den Druckluftvorratsbehältern 3 und 4 verbindbar. Eine Druckluftleitung 26 ist mittels des elektromagnetischen Ventils 24 mit der Druckluftleitung 25 in einem ersten, bestromten Zustand des elektromagnetischen Ventils 24 verbunden und belüftet. In einem zweiten, unbestromten Zustand des elektromagnetischen Ventils 24 wird die Druckluftleitung 26 mittels dieses Ventils 24 entlüftet. Auf diese Weise ist mittels des elektromagnetischen Ventils 24 ein Luftdruck in der Druckluftleitung 26 aussteuerbar.

Die Luftmenge des von dem elektromagnetischen Ventil 24 ausgesteuerten Luftdrucks in der Druckluftleitung 26 ist mittels einer luftmengenverstärkenden Ventileinheit 27 verstärkbar. Hierzu ist die luftmengenverstärkende Ventileinheit 27 über eine Druckluftleitung 28 mit Druckluft aus den Druckluftvorratsbehältern 3 und 4 verbunden. Die von der luftmengenverstärkenden Ventileinheit 27 luftmengenverstärkte Druckluft ist über eine Druckluftleitung 29, ein sog. Select-High-Ventil 30, d.h. ein Wechselventil mit Rückströmung, und eine Druckluftleitung 31 einem Druckluftausgang 32 des Feststellbremsmodulators 1 zuführbar. Mit der am Druckluftausgang 32 bereitgestellten Druckluft sind Federspeicherteile 33 und 34 von kombinierten Federspeicher-/Membranbremszylindern 35 und 36 belüftbar. Im belüfteten Zustand der Federspeicherteile 33 und 34 ist die Feststellbremse des Zugfahrzeugs gelöst. Durch Entlüften der Druckluftleitung 26 über das unbestromte elektromagnetische Ventil 24 werden die Federspeicherteile 33 und 34 der kombinierten Federspeicher-/Membranbremszylinder 35 und 36 über die luftmengenverstärkende Ventileinheit 27 entlüftet. Im entlüfteten Zustand der Federspeicherteile 33 und 34 der kombinierten Federspeicher-/Membranbremszylinder 35 und 36 ist die Feststellbremse des Zugfahrzeugs eingelegt, d.h. die Feststellbremsfunktion aktiviert.

Das Select-High-Ventil 30 ist mit einem ersten Eingang mit der Druckluftleitung 29 verbunden. Mit einem zweiten Eingang ist das Select-High-Ventil 30 über eine Druckluftleitung 37 mit der Druckluftleitung 15 und damit über das Select-High-Ventil 23 mit den Druckluftsteuereingängen 21 und 22 verbunden. Bei eingelegter Feststellbremse belüftet nämlich Druckluft mit einem in der Bremspedaleinrichtung 18 erzeugten Druck über eine nicht dargestellte Druckluftleitung die Membranteile 38 und 39 der kombinierten Federspeicher-/Membranbremszylinder 35 und 36. Über die Druckluftleitung 37, das Select-High-Ventil 30 und die Druckluftleitung 31 ist sichergestellt, dass der Luftdruck in den Federspeicherteilen 33 und 34 der kombinierten Federspeicher-/Membranbremszylinder 35 und 36 immer mindestens so groß ist wie der Luftdruck in den Membranteilen 38 und 39 der kombinierten Federspeicher-/Membranbremszylinder 35 und 36. Hierdurch wird erreicht, dass sich die von der Feststellbremse und die von der Betriebsbremse bereitgestellten Zuspannkräften in den kombinierten Federspeicher-/Membranbremszylindern 35 und 36 nicht addieren. Vielmehr ist die Zuspannkraft immer gleich der größeren der beiden Zuspannkräfte, welche mittels der Feststellbremse und der Betriebsbremse bereitgestellt werden. Eine Überbeanspruchung von Bremsen wird damit vermieden.

Für die automatische Steuerung des Feststellbremsmodulators 1 weist dieser Drucksensoren 40, 41, 42 und 43 auf. Mittels dieser Drucksensoren 40, 41, 42 und 43 ist der pneumatische Druck in verschiedenen Druckluftleitungen im Feststellbremsmodulator 1 messbar. Der Drucksensor 40 misst den am Druckluftvorratseingang 7 bereitgestellten Vorratsdruck. Der am Druckluftvorratseingang 8 bereitgestellte Vorratsdruck ist mittels des Drucksensors 41 messbar. Vom Drucksensor 42 ist der dem Anhängefahrzeug am Druckluftvorratsausgang 14 bereitgestellte Vorratsdruck messbar. Der mittels des elektromagnetischen Ventils 24 ausgesteuerte und in der luftmengenverstärkenden Ventileinheit 27 mengenmäßig verstärkte Luftdruck in der Druckluftleitung 29 ist mittels des Drucksensors 43 messbar.

Die Drucksensoren 40, 41, 42 und 43 sind über Datenleitungen 44 mit einer Steuereinheit 45 verbunden. Von der Steuereinheit 45 sind über die Datenleitungen 44 Messwerte von - von den Drucksensoren 40, 41, 42 und 43 - gemessenen Drücken empfangbar. Ferner sind die elektromagnetischen Ventile 12 und 24 über elektrische Leitungen 45' steuerbar. Der Luftdruck in den Druckluftleitungen 13 und 26 ist damit von der Steuereinheit 45 regelbar.

Die Steuereinheit 45 weist darüber hinaus weitere Anschlüsse auf. Mittels einer Betätigungseinrichtung 46 sind Signale zum Einlegen oder Lösen der Feststellbremse des Zugfahrzeugs sendbar. Zum Einlegen der Feststellbremse des Anhängefahrzeugs ist eine Betätigungseinrichtung 47 betätigbar, von welcher Signale an die Steuereinheit 45 sendbar sind. Mittels einer Betätigungseinrichtung 48 sind Signale an die Steuereinheit 45 sendbar, mittels derer der Bremsdruck für die Betriebsbremse des Anhängefahrzeugs steuerbar oder regelbar ist.

Ferner sieht die Steuereinheit 45 noch einen Anschluss für Datenleitungen 49 vor, mittels derer Daten mit einem nicht dargestellten Modul im Anhängefahrzeug zur Steuerung und ggf. zur Überwachung der Bremsen im Anhängefahrzeug austauschbar sind. Ferner sind Datenleitungen 50 und 51 vorgesehen, über welche eine CAN-Kommunikation bzw. eine SAE-Kommunikation mit der Steuereinheit 45 herstellbar ist.

Zur Energieversorgung weist die Steuereinheit 45 vorzugsweise doppelt ausgelegte elektrische Leitungspaare 52, 53 zur Verbindung mit einer Energieversorgung, insbesondere Batterie, auf. Die somit redundant ausgebildeten Leitungspaare 52, 53 erhöhen die Betriebssicherheit der Steuereinheit 45 und damit auch die Betriebssicherheit des Feststellbremsmodulators 1. Bei Ausfall eines der beiden Leitungspaare 52, 53 sind die elektromagnetischen Ventile 12 und 24 im Feststellbremsmodulator 1 über die elektrischen Leitungen 45' mittels der von der anderen Energieversorgung bereitgestellten Energie von der Steuereinheit 45 steuerbar.

Die Erfindung sieht verschiedene Möglichkeiten vor, einen Druckverlust am Druckluftvorratsausgang 14 festzustellen. Diese verschiedenen Möglichkeiten sind einzeln oder auch in Kombination einsetzbar.

Eine einfache Möglichkeit, einen Druckverlust festzustellen, ist mit Hilfe des Drucksensors 42 gegeben. Durch Vergleich des mittels des Drucksensors 42 gemessenen Drucks mit einem vordefinierten Mindestdruck ist bei Unterschreiten des Mindestdrucks auf einen Druckverlust am Druckluftvorratsausgang 14 schließbar, sofern das elektromagnetische Ventil 12 sich im bestromten Zustand befindet. Bei festgestelltem und zulässigem Druckabfall am Druckluftvorratsausgang 14 ist dann das elektromagnetische Ventil 12 mittels der elektrischen Leitungen 45' in den unbestromten Zustand überführbar. Damit wird ein weiteres Absinken auch des Vorratsluftdrucks in den Druckluftvorratsbehältern 3 und 4 unter den vorbestimmten Schwellenwert durch Entlüftung dieser Druckluftvorratsbehälter 3 und 4 über den Druckluftvorratsausgang 14 verhindert.

In einer weiteren Variante ist ein Abfall des Luftdrucks am Druckluftvorratsausgang 14 durch Vergleich zweier in einem zeitlichen Abstand gemessener Messwerte des pneumatischen Drucks erkennbar. Hierzu sind ebenfalls Messwerte des Drucksensors 42 verwendbar. Es ergibt sich somit ein zeitlicher Druckgradient, welcher mit einem maximal zulässigen Wert vergleichbar ist. Der maximal zulässige Wert kann dabei von weiteren den Fahrzeugzustand, insbesondere einen Bremsvorgang kennzeichnenden Werten abhängen und variabel sein. Der gemessene Wert des zeitlichen Druckgradienten weicht nämlich auch während eines über die Bremspedaleinrichtung 18 eingeleiteten Bremsvorgangs von Null ab. Folglich ist der zulässige Grenzwert in diesem Fall, d.h. während eines Bremsvorgangs größer wählbar.

Durch Vergleich des mittels des Drucksensors 42 gemessenen Drucks mit den mittels der Drucksensoren 40 und 41 gemessenen Drücke ist ferner wenigstens ein örtlicher Druckgradient feststellbar. Auch dieser örtliche Druckgradient weicht während eines Bremsvorgangs von Null ab. Bei einem Leitungsabriss der Druckluftleitung 13 zum Anhängefahrzeug und einem schnellen Entweichen von Druckluft über den Druckluftvorratsausgang 14 nimmt ein derart gemessener örtlicher Druckgradient jedoch größere Werte an als während eines Bremsvorgangs ohne weiteren Druckverlust durch einen Leitungsabriss. Folglich ist auch hier ein Grenzwert ggf. in Abhängigkeit von weiteren den Bremsvorgang kennzeichnenden Werten wählbar und ein Leitungsabriss der Druckluftleitung 13 zum Anhängefahrzeug durch Vergleich des gemessenen örtlichen Druckgradienten mit dem gewählten Grenzwert erkennbar. Bei Überschreiten des Grenzwerts ist das elektromagnetische Ventil 12 in den unbestromten Zustand überführbar.

Die Select-High-Ventile 23 und 30 sind ebenso wie das Doppelrückschlagventil 9 in den Feststellbremsmodulator 1 integriert. Die zusammengefasste Bauweise spart Kosten und vermindert Leckagerisiken. In Abweichung von diesem Ausführungsbeispiel kann jedoch auch wenigstens eines dieser drei Ventile 23, 30 oder 9 außerhalb des Feststellbremsmodulators 1 angeordnet sein.

Insbesondere befindet sich in einer von dem Ausführungsbeispiel gemäß Fig. 1 abweichenden Ausführung das Doppelrückschlagventil 9 außerhalb des Feststellbremsmodulators 1. Die Druckluftleitungen 5 und 6 sowie die den Druck in diesen Druckluftleitungen 5 und 6 messenden Drucksensoren 40 und 41 befinden sich dann ebenfalls außerhalb des Feststellbremsmodulators 1. Anstelle der Druckluftvorratseingänge 7 und 8, durch welche im Ausführungsbeispiel gemäß Fig. 1 die Druckluftleitungen 5 und 6 geführt werden, benötigt diese davon abweichende Ausführungsform des Feststellbremsmodulators 1 lediglich einen Druckluftvorratseingang, durch welchen die Druckluftleitung 10 geführt wird.

In einer abweichenden Ausführung des Feststellbremsmodulators 1 ist der Druck in der Druckluftleitung 10 mittels eines Drucksensors alternativ oder zusätzlich zu den Drücken in den Druckluftleitungen 5 und 6 mittels der Drucksensoren 40 und 41 messbar. Dieser Drucksensor befindet sich in einer Variante der Erfindung außerhalb und in einer anderen Variante der Erfindung innerhalb des Feststellbremsmodulators 1.

Im Fall eines außerhalb des Feststellbremsmodulators 1 liegenden Doppelrückschlagventils 9 ist mittels dieses Drucksensors der pneumatische Druck an dem dann einen Druckluftvorratseingang, durch welchen die Druckluftleitung 10 geführt wird, messbar. In einer weiteren Ausführung mit einem innerhalb des Feststellbremsmodulators 1 verbauten Doppelrückschlagventil 9 ist mittels dieses Drucksensors der höhere der an den Druckluftvorratseingängen 7 und 8 anliegenden Drücke messbar.

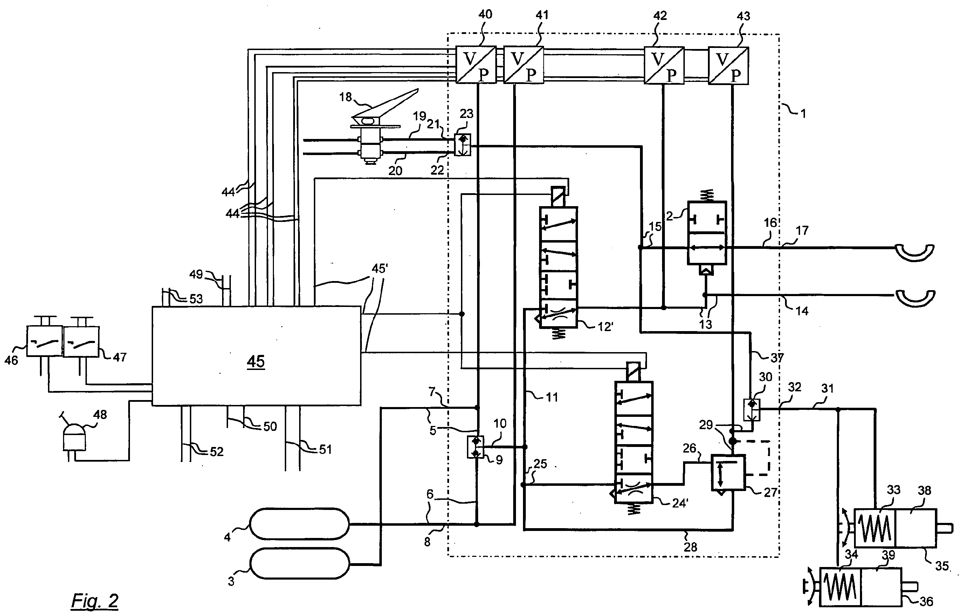

Fig. 2 zeigt ausgewählte Teile einer Druckluftbremsanlage für einen Fahrzeugzug mit dem erfindungsgemäßen Feststellbremsmodulator gemäß einem weiteren Ausführungsbeispiel, in den ein Zugwagenschutzventil integriert ist. Der Unterschied zum Ausführungsbeispiel gemäß Fig. 1 besteht in der Ausführung der elektromagnetischen Ventile 12' und 24'. Diese beiden elektromagnetischen Ventile 12' und 24' weisen nämlich jeweils vier mögliche Zustände auf. Die Druckluftleitung 13 bzw. die Druckluftleitung 26 ist im unbestromten Zustand des elektromagnetischen Ventils 12' bzw. 24' gedrosselt entlüftbar. Vorteilhaft ist dies insbesondere bei einem Ausfall der Elektronik, bei welchem die elektromagnetischen Ventile 12' und 24' bspw. auch während der Fahrt in den unbestromten Zustand wechseln. Hier würde ein schnelles Entlüften der Druckluftleitungen 13 und 26 zu einem schnellen Einlegen der Feststellbremse am Zugfahrzeug und ggf. der Feststellbremse am Anhängefahrzeug führen. Durch das gedrosselte Entlüften der Druckluftleitungen 13 und 26 vergehen einige Sekunden bis Minuten, bevor die Feststellbremse am Zugfahrzeug und ggf. am Anhängefahrzeug vollständig eingelegt ist. Folglich kommt es weniger schnell zum Blockieren von Rädern.

Des weiteren weisen die elektromagnetischen Ventile 12' und 24' in Fig. 2 gegenüber Fig. 1 den zusätzlichen Schaltzustand Halten auf. In diesem Schaltzustand wird die Druckluftleitung 13 bzw. die Druckluftleitung 26 über das elektromagnetische Ventil 12' bzw. 24' weder belüftet noch entlüftet. Dies reduziert den Verbrauch von Druckluft, wenn ein ausgesteuerter Luftdruck in der Druckluftleitung 13 bzw. in der Druckluftleitung 26 gehalten werden soll. Zum Halten des Luftdrucks mittels des elektromagnetischen Ventils 12 bzw. 24 nach Fig. 1 muss dieses elektromagnetische Ventil nämlich immer wieder zwischen den Zuständen Belüften und Entlüften wechseln. Beim Entlüften entweicht aber Druckluft aus der Druckluftleitung 13 bzw. 26, welche im Schaltzustand Belüften dann wieder aus einem Druckluftvorratsbehälter kommend eingespeist wird. Die elektromagnetischen Ventile 12' und 24' gemäß Fig. 2 vermeiden diesen Verlust von Druckluft. Es muss weniger Druckluft mittels eines Kompressors bereitgestellt werden. Somit kann Kraftstoff eingespart werden. Ggf. kann der Kompressor sogar kleiner gewählt, d.h. von niedrigerer Leistung und damit kostengünstiger sein. Die weitere Anordnung der Komponenten im Feststellbremsmodulator 1 ist gleich der in der Beschreibung zur Fig. 1 beschriebenen Anordnung. Ferner ist ein bestimmter Druck gleichmäßiger einstellbar.

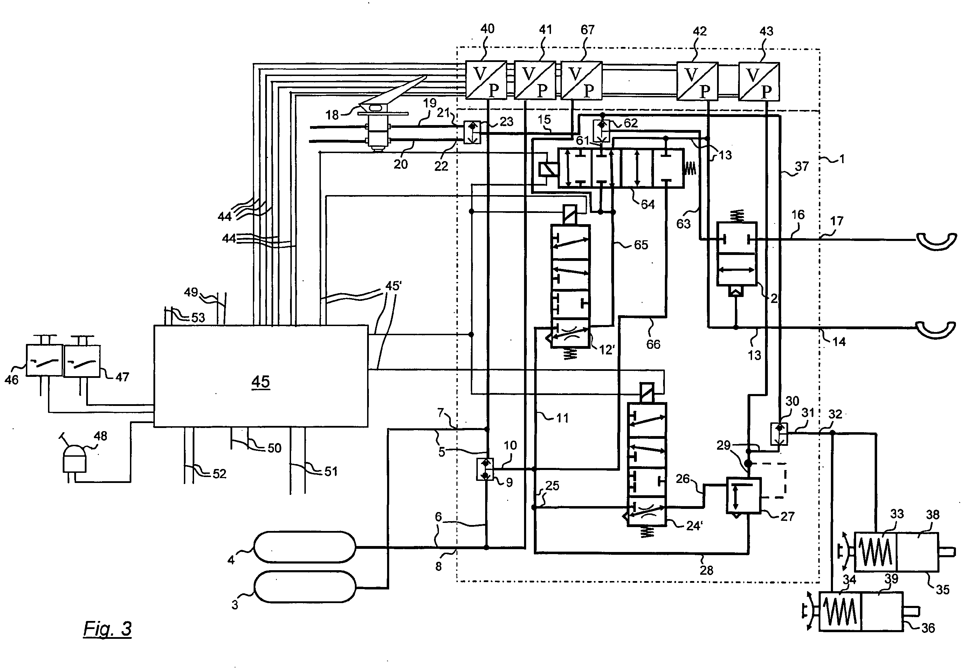

Fig. 3 zeigt ein Ausführungsbeispiel des Feststellbremsmodulators 1, in welchem im Vergleich zu den Ausführungsbeispielen nach Fig. 1 und Fig. 2 zusätzlich der am Luftdrucksteuerausgang 17 bereitstellbare Steuerdruck für das Anhängefahrzeug im Feststellbremsmodulator 1 modulierbar ist. Hierzu wird der höhere der an den Druckluftsteuereingängen 21 und 22 anliegenden Drücke über das Select-High-Ventil 23 nicht direkt über die Druckluftleitung 15 an das Halten-Ventil 2, die Druckluftleitung 16 und damit an den Druckluftsteuerausgang 17 gegeben. Vielmehr steht in einer Druckluftleitung 61 noch ein modulierter Druck bereit. Über ein Select-High-Ventil 62 und eine Druckluftleitung 63 ist nun der höhere der Drücke in den Druckluftleitungen 15 und 61 über das Halten-Ventil 2 und die Druckluftleitung 16 am Druckluftsteuerausgang 17 für das Anhängefahrzeug bereitstellbar. Der am Druckluftsteuerausgang 17 bereitgestellte Steuerdruck für das Anhängefahrzeug ist folglich immer mindestens so groß wie der größere der in der Bremspedaleinrichtung 18 ausgesteuerten und an den Druckluftsteuereingängen 21 und 22 anliegenden Drücke. Hierdurch ist immer gewährleistet, dass das Anhängefahrzeug mindestens so stark abbremst wie das Zugfahrzeug. Dies ist wichtig, um den Fahrzeugzug während einer Bremsung stabil zu halten.

Die Modulation des Steuerdrucks für das Anhängefahrzeug ist mittels des schon in den Ausführungsbeispielen gemäß der Fig. 1 und 2 vorhandenen elektromagnetischen Ventils 12' durchführbar. Mittels eines elektromagnetischen Ventils 64 ist eine am Ausgang des elektromagnetischen Ventils 12' angeschlossene Druckluftleitung 65 nämlich alternativ über die Druckluftleitung 13 mit dem Druckluftvorratsausgang 14 verbindbar oder über die Druckluftleitung 61 mit dem Select-High-Ventil 62 verbindbar. Im unbestromten Zustand des elektromagnetischen Ventils 64 ist die Funktionsweise des Ausführungsbeispiels gemäß Fig. 3 gleich der Funktionsweise des Ausführungsbeispiels gemäß Fig. 2. Im bestromten Zustand des elektromagnetischen Ventils 64 ist dagegen mittels des elektromagnetischen Ventils 12' der am Druckluftsteuerausgang 17 bereitgestellte Luftdruck gegenüber dem an den Druckluftsteuereingängen 21 und 22 anliegenden Luftdrücken erhöhbar. In diesem bestromten Zustand des elektromagnetischen Ventils 64 ist ferner über dieses elektromagnetische Ventil 64 und eine Druckluftleitung 66 die Druckluftleitung 13 mit der Druckluftleitung 10 und damit über die Druckluftleitungen 5 und 6 mit den Druckluftvorratsbehältern 3 und 4 verbindbar. Im bestromten Zustand des elektromagnetischen Ventils 64 liegt folglich am Druckluftvorratsausgang 14 der höhere der an den Druckluftvorratseingängen 7 und 8 anliegenden Drücke an. Dann sind im Anhängefahrzeug ggf. vorhandene Federspeicherteile von Federspeicher-/Membranbremszylindern belüftet. Die Feststellbremse ist dann nicht eingelegt und das Anhängefahrzeug wird nicht über die Feststellbremse eingebremst, d.h. die Feststellbremsfunktion des Anhängefahrzeugs ist dann deaktiviert.

Im Fahrbetrieb ist eine Modulation des Vorratsluftdrucks für das Anhängefahrzeug nicht notwendig. Deshalb kann im Fahrbetrieb das vorhandene elektromagnetische Ventil 12' vorteilhaft zur Modulation des Steuerdrucks für das Anhängefahrzeug verwendet werden. Damit ist dann bspw. eine Steckbremsfunktion über die Betriebsbremse herstellbar. Im Vergleich zu den Ausführungsbeispielen gemäß Fig.1 und Fig. 2 weist das Ausführungsbeispiel gemäß Fig. 3 noch einen zusätzlichen Drucksensor 67 auf. Die Druckluftleitung 65 ist nämlich nicht in jedem Fall über die Druckluftleitung 13 mit dem Drucksensor 42 verbunden. Deshalb ist der mittels des elektromagnetischen Ventils 12' in der Druckluftleitung 65 modulierte Druck mittels des Drucksensors 67 messbar. Aus Kostengründen könnte bei reduzierter Auflösung der Leitungsabrisserkennung auf den Drucksensor 42 verzichtet werden.

In diesem Ausführungsbeispiel der Erfindung sind ggf. auch Messwerte des Drucksensors 67 zum Feststellen eines Druckabfalls am Druckluftvorratsausgang 14 heranziehbar.

Die Drucksensoren 40, 41, 42, 43 und 67 sind in den Feststellbremsmodulator 1 integriert. Alternativ ist bzw. sind wenigstens ein, mehrere oder alle Drucksensoren 40, 41, 42, 43 und/oder 67 nicht in den Feststellbremsmodulator 1 integriert. Dann führt wenigstens eine Druckluftleitung aus dem Feststellbremsmodulator 1 hinaus, an welcher mittels wenigstens eines der Drucksensoren 40, 41, 42, 43 und/oder 67 ein Luftdruck messbar ist. Aus Kostengründen ist jedoch die integrierte Bauweise der aufgelösten Bauweise vorzuziehen.

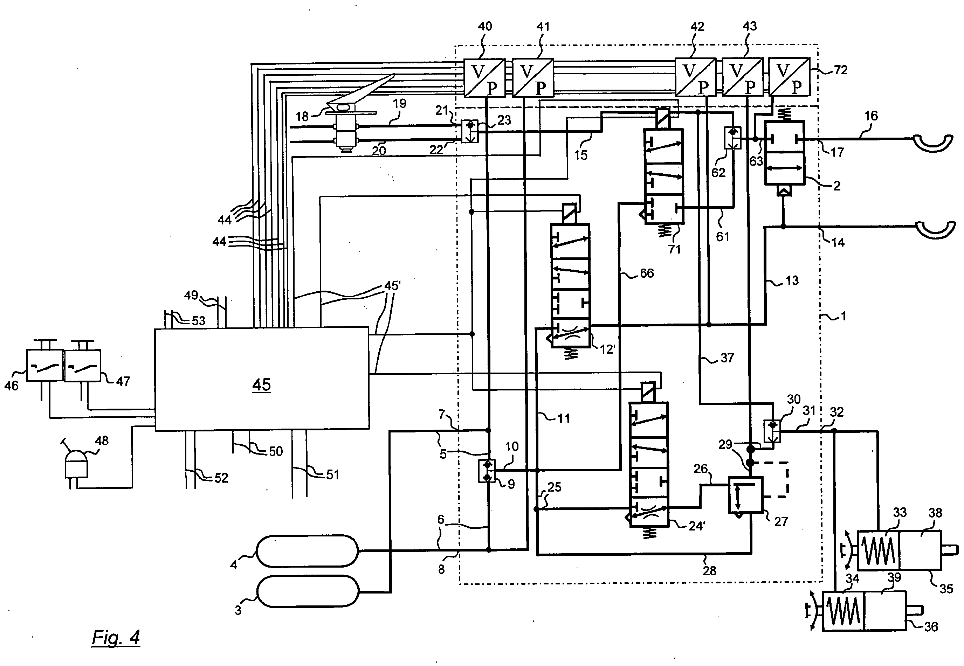

Fig. 4 zeigt ein weiteres Ausführungsbeispiel, in welchem wie beim Ausführungsbeispiel gemäß Fig. 3 ein Luftdruck in einer Druckluftleitung 61 modulierbar ist, wodurch der am Druckluftsteuerausgang 17 des Feststellbremsmodulators 1 bereitgestellte Steuerdruck für das Anhängefahrzeug gegenüber den an der Bremspedaleinrichtung 18 erzeugten und an den Druckluftsteuereingängen 21 und 22 des Feststellbremsmodulators 1 anliegenden Drücken erhöhbar ist.

Im Unterschied zum Ausführungsbeispiel gemäß Fig. 3 verwendet das Ausführungsbeispiel gemäß Fig. 4 nicht das elektromagnetische Ventil 12' zur Modulation des Drucks in der Druckluftleitung 61. Vielmehr ist der Druck in der Druckluftleitung 61 über ein elektromagnetisches Ventil 71 und die Druckluftleitung 66 modulierbar. Die Druckluftleitung 66 ist nämlich mit Druckluft aus den Druckluftvorratsbehältern 3 und 4 versorgbar.

Das elektromagnetische Ventil 71 hat drei mögliche Zustände. Im unbestromten Zustand des elektromagnetischen Ventils 71 ist die Druckluftleitung 66 von der Druckluftleitung 61 getrennt. Dann ist der ausgesteuerte Druck in der Druckluftleitung 61 haltbar. In zwei anderen Zuständen ist über das elektromagnetische Ventil 71 die Druckluftleitung 61 entweder belüftbar bzw. entlüftbar.

In der Druckluftleitung 63 ist eine Verbindung zu einem weiteren Drucksensor 72 vorgesehen. Messwerte des Drucksensors 72 werden zur Regelung des modulierten Drucks für die Streckbremsfunktion verwendet. Auch ein Leitungsabriss der Druckluftleitung 16 mit einem einhergehenden Druckverlust am Druckluftsteuerausgang 17 ist mittels des Drucksensors 72 erkennbar, falls das Halten-Ventil 2 sich noch in der durchleitenden Stellung befindet, d.h. falls der Druck in der Druckluftleitung 13 noch über einem vordefinierten Grenzwert liegt.

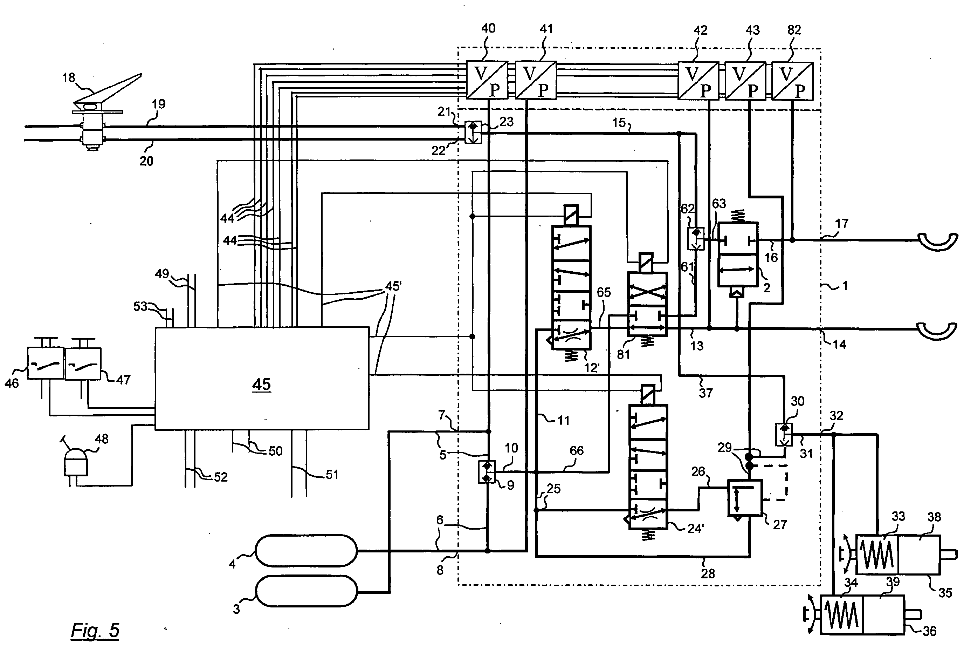

Fig. 5 zeigt ein weiteres Ausführungsbeispiel der Erfindung mit einem in den Feststellbremsmodulator 1 integrierten Halten-Ventil 2, wobei der am Druckluftsteuerausgang 17 bereitgestellte Steuerdruck für das Anhängefahrzeug im Feststellbremsmodulator 1 modulierbar ist. Das Ausführungsbeispiel gemäß Fig. 5 gleicht dabei weitestgehend dem Ausführungsbeispiel gemäß Fig. 3. Anstelle des elektromagnetischen Ventils 64 ist jedoch ein elektromagnetisches Ventil 81 verbaut. Dieses elektromagnetische Ventil 81 hat zwei Eingänge, zwei Ausgänge und zwei mögliche Zustände. Im unbestromten Zustand ist die Funktionsweise des Ausführungsbeispiels gemäß Fig. 5 gleich der Funktionsweise des Ausführungsbeispiels gemäß Fig. 2. Der Steuerdruck ist dann nämlich nicht modulierbar. Im bestromten Zustand des elektromagnetischen Ventils 81 ist jedoch der Druck in der Druckluftleitung 61 mittels des elektromagnetischen Ventils 12' modulierbar. Der größte der Drücke in den Druckluftleitungen 61, 19 und 20 ist gleich dem Druck, welcher hinter dem Select-High-Ventil 62 in der Druckluftleitung 63 anliegt und bei durchgeschaltetem Halten-Ventil 2 am Druckluftsteuerausgang 17 des Feststellbremsmodulators 1 anliegt.

Vorteilhaft an der Verwendung des elektromagnetischen Ventils 81 gegenüber der Verwendung des elektromagnetischen Ventils 64 im Ausführungsbeispiel gemäß Fig. 3 ist die geringere Anzahl von Anschlüssen des elektromagnetischen Ventils 81 sowie die geringe Anzahl von Verzweigungen in den Druckluftleitungen 65 und 13. Das elektromagnetische Ventil 64 des Ausführungsbeispiels gemäß Fig. 3 weist nämlich sechs Anschlüsse für Druckluftleitungen auf, während das elektromagnetische Ventil 81 des Ausführungsbeispiels gemäß Fig. 5 lediglich vier Anschlüsse für Druckluftleitungen aufweist.

Ein weiterer Unterschied des Ausführungsbeispiels gemäß Fig. 5 gegenüber dem Ausführungsbeispiel gemäß Fig. 3 besteht in der Messung der Drücke in den Druckluftleitungen. Anstelle des Drucksensors 67 gemäß Fig. 3 ist im Ausführungsbeispiel gemäß Fig. 5 nämlich ein Drucksensor 82 verbaut. Mittels des Drucksensors 82 ist nicht der pneumatische Druck in der Druckluftleitung 65 sondern der pneumatische Druck in der Druckluftleitung 16 bzw. am Druckluftsteuerausgang 17 des Feststellbremsmodulators 1 messbar. Ein Druckabfall am Druckluftsteuerausgang 17 ist deshalb schnell mittels des Drucksensors 82 erkennbar. Bei einem Druckabfall am Druckluftsteuerausgang 17 sollte das Halten-Ventil 2 die Verbindung zwischen der Druckluftleitung 63 und der Druckluftleitung 16 bzw. dem Druckluftsteuerausgang 17 des Feststellbremsmodulators 1 absperren. Hierzu ist ein schnelles Entlüften der Druckluftleitung 13 erforderlich. In den meisten Fällen wird ein gleichzeitiger oder nahezu gleichzeitiger Leitungsabriss sowohl der Druckluftleitung 16 als auch der Druckluftleitung 13 zum Anhängefahrzeug stattfinden. Sollte aber nur Druckluft für den Steuerdruck über den Druckluftsteuerausgang 17 entweichen, ist dies mittels des Drucksensors 82 erkennbar, daraufhin das elektromagnetische Ventil 81 in den unbestromten Zustand wechselbar und die Druckluftleitungen 13 und 65 schnell über das elektromagnetische Ventil 12' im vollbestromten Zustand dieses Ventils entlüftbar. Direkt durch das elektromagnetische Ventil 12' und indirekt über das bei Druckabfall unter einen bestimmten Schwellenwert in der Druckluftleitung 13 in den absperrenden Zustand wechselnde Halten-Ventil 2 ist damit das Bremssystem des Zugfahrzeugs vor einem Versagen aufgrund eines zu geringen Steuerdrucks und/oder Vorratsdrucks geschützt.

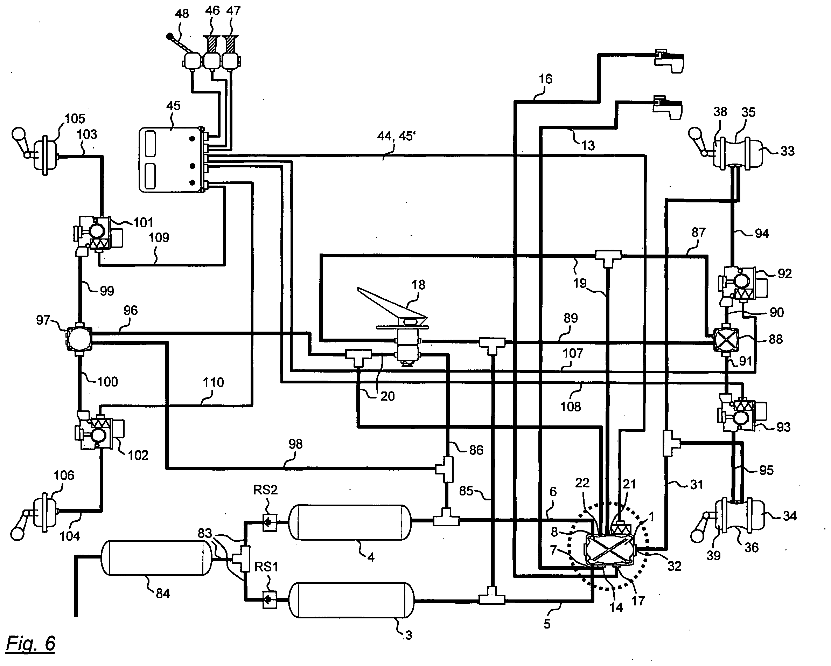

Fig. 6 zeigt einen Feststellbremsmodulator 1 mit darin integriertem Zugwagenschutzventil 2 in einer Druckluftbremsanlage in vereinfachter schematischer Darstellung. Im Vergleich zu den Fig. 1 bis 5 sind in Fig. 6 weitere Komponenten der Druckluftbremsanlage dargestellt. Der Feststellbremsmodulator 1 selbst ist unter Verzicht einer Darstellung seines inneren Aufbaus lediglich mit seinen Drucklufteingängen, Druckluftausgängen und elektrischen Anschlüssen dargestellt. Der Feststellbremsmodulator 1 kann eine beliebige Ausführungsform mit integriertem Zugwagenschutzventil 2 sein.

Der Feststellbremsmodulator 1 weist die zwei Druckluftvorratseingänge 7 und 8 auf. Diese Druckluftvorratseingänge 7 und 8 sind über die Druckluftleitungen 5 und 6 mit den Druckluftvorratsbehältern 3 und 4 verbunden. Über die Druckluftvorratseingänge 7 und 8 ist der Feststellbremsmodulator 1 mit Druckluft aus den Druckluftvorratsbehältern 3 und 4 versorgbar. Die Druckluftvorratsbehälter 3 und 4 sind ihrerseits über Druckluftleitungen 83 und unter Zwischenschaltung von jeweiligen Rückschlagventilen RS1, RS2 mit einem weiteren Druckluftbehälter 84 verbunden, der mit einer Druckluftversorgungseinrichtung, insbesondere einem Kompressor, in Verbindung steht. Von dieser Druckluftversorgungseinrichtung 84 ist den Druckluftvorratsbehältern 3 und 4 Druckluft bereitstellbar.

Ferner zeigt die Abbildung die Druckluftsteuereingänge 21 und 22 am Feststellbremsmodulator 1. Für einen ersten Bremskreis und für einen zweiten Bremskreis sind die von der Bremspedaleinrichtung 18 ausgesteuerten Drücke über die Druckluftleitungen 19 und 20 und die Druckluftsteuereingänge 21 und 22 dem Feststellbremsmodulator 1 bereitstellbar. Druckluft zum Aussteuern für den ersten Bremskreis ist der Bremspedaleinrichtung 18 aus dem Druckluftvorratsbehälter 3 über eine Druckluftleitung 85 bereitstellbar. Über eine Druckluftleitung 86 ist der Bremspedaleinrichtung 18 Druckluft aus dem zweiten Druckluftvorratsbehälter 4 für den zweiten Bremskreis bereitstellbar.

Der Druck im ersten Bremskreis mit der Druckluftleitung 19 und der Druck im zweiten Bremskreis mit der Druckluftleitung 20 ist mittels der Bremspedaleinrichtung 18 pneumatisch und/oder elektropneumatisch aussteuerbar. Für eine elektropneumatische Aussteuerung der Drücke ist eine nicht dargestellte Ventileinheit vorgesehen. Die Bremspedaleinrichtung 18 erzeugt dann auch ein Bremsanforderungssignal, welches der Ventileinheit bereitstellbar ist.

Der ausgesteuerte Druck des ersten Bremskreises ist über eine Druckluftleitung 87 einem Relaisventil 88 bereitstellbar. Das Relaisventil 88 ist ferner über eine Druckluftleitung 89 mit dem Vorratsdruck des Druckluftvorratsbehälters 3 versorgbar. Das Relaisventil 88 ist eine luftmengenverstärkende Ventileinheit, welche den in der Druckluftleitung 87 ausgesteuerten Druck luftmengenverstärkt über Druckluftleitungen 90 und 91, Antiblockiersystem(ABS)-Ventile 92 und 93 sowie Druckluftleitungen 94 und 95 den Betriebsbremsteilen 38 und 39 der kombinierten Federspeicher-/Membranbremszylinder 35 und 36 bereitstellt. Mit diesen kombinierten Federspeicher-/Membranbremszylindern 35 und 36 ist die Betriebsbremsfunktion an Rädern einer Hinterachse eines Fahrzeugs ausführbar.

Das Blockieren eines Rades ist mit Hilfe nicht dargestellter Sensoren erkennbar. Hierfür befinden sich bspw. Drehzahlsensoren an den Rädern. Die Signale dieser Sensoren sind an die Steuereinheit 45 sendbar. Das ABS-Ventil 92 bzw. 93 entlüftet die Druckluftleitung 94 bzw. 95 bei festgestelltem Blockieren eines Rades, welches mittels des kombinierten Federspeicher-/Membranbremszylinders 35 bzw. 36 eingebremst wird.

Die kombinierten Federspeicher-/Membranbremszylinder 35 und 36 sind ferner über die Druckluftleitung 31 mit dem Druckluftausgang 32 des Feststellbremsmodulators 1 verbunden. Vom Feststellbremsmodulator 1 können somit die Federspeicherteile 33 und 34 der kombinierten Federspeicher-/Membranbremszylinder 35 und 36 belüftet oder entlüftet werden. Hierdurch wird die Feststellbremse gelöst bzw. eingelegt.

Der von der Bremspedaleinrichtung 18 ausgesteuerte Luftdruck für den zweiten Bremskreis ist mittels einer Druckluftleitung 96 einem Relaisventil 97 bereitstellbar. Dieses Relaisventil 97 ist eine luftmengenverstärkende Ventileinheit, welche über eine Druckluftleitung 98 vom zweiten Druckluftvorratsbehälter 4 bereitgestellte Druckluft mit dem ausgesteuerten Druck der Druckluftleitung 96 über Druckluftleitungen 99 und 100, ABS-Ventile 101 und 102 sowie Druckluftleitungen 103 und 104 Bremszylindern 105 und 106 zur Abbremsung von Rädern an einer Vorderachse eines Fahrzeugs bereitstellt.

Die Funktionsweise der ABS-Ventile 101 und 102 ergibt sich entsprechend der Funktionsweise der ABS-Ventile 92 und 93. Zum Feststellen eines Blockierens von Rädern, welche mittels der Bremszylinder 105 und 106 abbremsbar sind, sind nicht dargestellte Sensoren vorgesehen. Von diesen Sensoren sind Signale über nicht dargestellte Datenleitungen an die Steuereinheit 45 sendbar.

In der Abbildung sind die ABS-Ventile 92, 93, 101 und 102 von der Steuereinheit 45 über elektrische Leitungen 107, 108, 109 und 110 steuerbar.

Die Erfindung beschränkt sich nicht auf die hier gezeigten Ausführungsbeispiele. Sie erstreckt sich auch auf weitere Ausführungsformen des erfindungsgemäßen Feststellbremsmodulators, in welchen bspw. andere elektromagnetische Ventile verbaut sind und in welchen ein Zugwagenschutzventil 2 in den Feststellbremsmodulator 1 integriert ist. Das Zugwagenschutzventil 2 muss dabei kein Halten-Ventil 2 sein. Es kann vielmehr auch ein anderes Ventil oder eine Anordnung mehrerer anderer Ventile sein, welche die Funktion eines Zugwagenschutzventils 2 aufweist.

Ferner können die in den Fig. 1 bis 5 mit strichpunktierten Linien dargestellten Systemgrenzen des jeweiligen Feststellbremsmodulators 1 mehr oder auch weniger als die von den dargestellten Systemgrenzen erfassten Bauteile umfassen, d.h. im Feststellbremsmodulator 1 können auch mehr oder weniger Bauteile integriert sein.

Bei reduzierten Ansprüchen an das Systemverhalten bei Ausfall der elektrischen Energieversorgung kann auf die Funktion des langsamen Entlüftens bei den Ventilen 12', 24' in den Fig. 2 bis 5 verzichtet werden.

Alle in der vorstehenden Beschreibung sowie in den Ansprüchen genannten Merkmale sind erfindungsgemäß sowohl einzeln als auch in beliebiger Kombination miteinander einsetzbar. Die Erfindung ist daher nicht auf die beschriebenen bzw. beanspruchten Merkmalskombinationen beschränkt. Vielmehr sind alle Kombinationen von Einzelmerkmalen als offenbart zu betrachten.

## Patentansprüche

1. Elektropneumatischer Feststellbremsmodulator zur Steuerung einer Feststellbremsfunktion von Bremsen wenigstens eines Anhängefahrzeugs in einem Fahrzeugzug, bestehend aus einem Zugfahrzeug und dem Anhängefahrzeug, wobei der Feststellbremsmodulator (1) eine Ventileinrichtung (12) zum Belüften und Entlüften von Federspeicherbremszylindern bzw. Federspeicherteilen (33, 34) von kombinierten Federspeicher-/Membranbremszylindern (35, 36) der Bremsen des Anhängefahrzeugs aufweist, wobei der Feststellbremsmodulator (1) wenigstens einen Druckluftvorratseingang (7, 8) zur Belüftung wenigstens einer Druckluftleitung (10) im Feststellbremsmodulator (1) mit Druckluft aus einem Druckluftvorratsbehälter (3, 4) des Zugwagens aufweist und wobei der Feststellbremsmodulator wenigstens einen Druckluftvorratsausgang (14) aufweist, an welchem ein Vorratsdruck für die Bremsen des Anhängefahrzeugs bereitstellbar ist, und wenigstens einen Druckluftsteuerausgang (17) aufweist, an welchem ein Steuerdruck für die Bremsen des Anhängefahrzeugs bereitstellbar ist, **gekennzeichnet durch** ein in den Feststellbremsmodulator (1) integriertes Zugwagenschutzventil (2), wobei eine Druckluftleitung (16) zu dem wenigstens einen Druckluftsteuerausgang (17) bei einem Druckabfall des für das Anhängefahrzeug bereitgestellten Vorratsdrucks unter einen vorbestimmten Schwellenwert automatisch absperrbar ist.

2. Feststellbremsmodulator nach Anspruch 1, **dadurch gekennzeichnet, dass** das Zugwagenschutzventil (2) ein pneumatisches Halten-Ventil (2) ist, das mit dem für das Anhängefahrzeug bereitgestellten Vorratsdruck schaltbar ist und über das die Druckluftleitung (16), welche einen Steuerdruck für die Bremsen des Anhängefahrzeugs bereitstellt, zum Ausgang (17) des Feststellbremsmodulators (1) absperrbar ist.

3. Feststellbremsmodulator nach einem der Ansprüche 1 oder 2, insbesondere nach Anspruch 2, **dadurch gekennzeichnet, dass** die Vorratsdruckleitung (13) zum Anhängefahrzeug bei einem Druckabfall unter einen vorbestimmten Schwellenwert im Feststellbremsmodulator (1) automatisch von dem vom Zugfahrzeug bereitgestellten Vorratsdruck absperrbar ist.

4. Feststellbremsmodulator nach einem der vorhergehenden Ansprüche, insbesondere nach Anspruch 3, **gekennzeichnet durch** einen Drucksensor (42), mittels dessen ein Druckabfall des für den Anhänger bereitgestellten Vorratsdrucks feststellbar ist, wobei mittels dieses Messwertes alleine oder zusammen mit wenigstens einem weiteren den Fahrzeugzustand, insbesondere einen Bremsvorgang kennzeichnenden Wert, erkennbar ist, ob ein unerwarteter Druckabfall des Vorratsdrucks für den Anhänger vorliegt, und bei erkanntem unerwarteten Druckabfall der Vorratsdruck für den Anhänger automatisch von dem vom Zugfahrzeug bereitgestellten Vorratsdruck absperrbar ist.

5. Feststellbremsmodulator (1) nach Anspruch 4, **dadurch gekennzeichnet, dass** ein unerwarteter Druckabfall anhand wenigstens eines zeitlichen und/oder örtlichen Druckgradienten des gemessenen Vorratsdrucks erkennbar ist, wobei der Druckgradient aus wenigstens zwei Messwerten ermittelbar ist.

6. Feststellbremsmodulator (1) nach einem der vorhergehenden Ansprüche, insbesondere nach Anspruch 5, **dadurch gekennzeichnet, dass** der Steuerdruck für das Anhängefahrzeug im Feststellbremsmodulator (1) modulierbar ist und über den an einem Druckluftsteuereingang (21, 22) des Feststellbremsmodulators (1) vorliegenden Steuerdruck hinaus erhöhbar ist.

7. Feststellbremsmodulator (1) nach einem der vorhergehenden Ansprüche, insbesondere nach Anspruch 6, **gekennzeichnet durch** eine Vorrichtung mit einem sog. Select-High-Ventil (62), d.h. ein Wechselventil mit Rückströmung, über das ein Eingang mit einem höheren von an wenigstens zwei Eingängen anliegenden Drücken mit einem Ausgang verbindbar ist, wobei am Ausgang ein Steuerdruck für das Anhängefahrzeug bereitstellbar ist, ein Eingang mit einem Druckluftsteuereingang (21, 22) des Feststellbremsmodulators (1) für den eingehenden Steuerdruck verbindbar ist und ein weiterer Eingang mit wenigstens einem Ventileinrichtung (12, 71) verbindbar ist, von der ein Druck modulierbar und bereitstellbar ist.

8. Feststellbremsmodulator (1) nach einem der vorhergehenden Ansprüche, insbesondere nach Anspruch 7, **dadurch gekennzeichnet, dass** eine Ventileinrichtung (12) alternativ entweder zur Modulation des Steuerdrucks oder zur Modulation des Vorratsdrucks für den Fahrzeuganhänger schaltbar ist.

## Claims

1. Electropneumatic parking brake modulator for controlling a parking brake function of brakes of at least one trailer vehicle in a vehicle combination composed of a tractor vehicle and the trailer vehicle, with the parking brake modulator (1) having a valve device (12) for aerating and deaerating spring brake cylinders or spring store parts (33, 34) of combined spring store/diaphragm brake cylinders (35, 36) of the brakes of the trailer vehicle, with the parking brake modulator (1) having at least one compressed air reservoir inlet (7, 8) for aerating at least one compressed air line (10) in the parking brake modulator (1) with compressed air from a compressed air reservoir (3, 4) of the tractor vehicle, and with the parking brake modulator having at least one compressed air reservoir outlet (14) at which a reservoir pressure for the brakes of the trailer vehicle can be provided, and having at least one compressed air control outlet (17) at which a control pressure for the brakes of the trailer vehicle can be provided, **characterized by** a tractor vehicle protection valve (2) which is integrated into the parking brake modulator (1), with it being possible for a compressed air line (16) to the at least one compressed air control outlet (17) to be automatically shut off in the event of a pressure drop of the reservoir pressure provided for the trailer vehicle below a predetermined threshold value.

2. Parking brake modulator according to Claim 1, **characterized in that** the tractor vehicle protection valve (2) is a pneumatic holding valve (2) which can be switched with the reservoir pressure provided for the trailer vehicle and by means of which the compressed air line (16), which provides a control pressure for the brakes of the trailer vehicle, to the outlet (17) of the parking brake modulator (1) can be shut off.

3. Parking brake modulator according to one of Claims 1 or 2, in particular according to Claim 2, **characterized in that** the reservoir pressure line (13) to the trailer vehicle can be automatically shut off from the reservoir pressure provided by the tractor vehicle in the event of a pressure drop below a predetermined threshold value in the parking brake modulator (1).

4. Parking brake modulator according to one of the preceding claims, in particular according to Claim 3, **characterized by** a pressure sensor (42), by means of which a pressure drop of the reservoir pressure provided for the trailer can be detected, with it being possible by means of said measured value alone or together with at least one further value characteristic of the vehicle state, in particular a braking process, to detect whether an unexpected pressure drop of the reservoir for the trailer has occurred, and with it being possible in the event of an unexpected pressure drop of the reserve pressure for the trailer being detected for said reserve pressure for the trailer to be automatically shut off from the reservoir pressure provided for the tractor vehicle.

5. Parking brake modulator (1) according to Claim 4, **characterized in that** an unexpected pressure drop can be detected on the basis of at least one pressure gradient over time and/or spatial pressure gradient of the measured reservoir pressure, with it being possible for the pressure gradient to be determined from at least two measured values.

6. Parking brake modulator (1) according to one of the preceding claims, in particular according to Claim 5, **characterized in that** the control pressure for the trailer vehicle can be modulated in the parking brake modulator (1) and can be increased beyond the control pressure prevailing at a compressed air control inlet (21, 22) of the parking brake modulator (1).

7. Parking brake modulator (1) according to one of the preceding claims, in particular according to Claim 6, **characterized by** a device having a so-called select-high valve (62), that is to say a shuttle valve with return flow, by means of which an inlet with a higher one of pressures prevailing at at least two inlets can be connected to an outlet, with it being possible for a control pressure for the trailer vehicle to be provided at the outlet, for an inlet to be connected to a compressed air control inlet (21, 22) of the parking brake modulator (1) for the incoming control pressure, and for a further inlet to be connected to at least one valve device (12, 71) by means of which a pressure can be modulated and provided.

8. Parking brake modulator (1) according to one of the preceding claims, in particular according to Claim 7, **characterized in that** a valve device (12) can be switched alternatively either so as to modulate the control pressure or to modulate the reservoir pressure for the vehicle trailer.

## Revendications

1. Modulateur électropneumatique de freinage de stationnement pour la commande d'une fonction de freinage de stationnement de freins d'au moins un véhicule tracté dans un train de véhicules, se composant d'un véhicule tracteur et du véhicule tracté, dans lequel le modulateur de freinage de stationnement (1) présente un système de vanne (12) pour alimenter et purger des cylindres de frein à accumulateur ou des parties d'accumulateurs (33, 34) de cylindres de frein combinés à accumulateur/membrane (35, 36) des freins du véhicule tracté, dans lequel le modulateur de freinage de stationnement (1) présente au moins une entrée de réserve d'air comprimé (7, 8) pour l'alimentation d'au moins une conduite d'air comprimé (10) dans le modulateur de freinage de stationnement (1) avec de l'air comprimé provenant d'un réservoir de stockage d'air comprimé (3, 4) du véhicule tracteur et dans lequel le modulateur de freinage de stationnement présente au moins une sortie de réserve d'air comprimé (14), à laquelle une pression de réserve pour les freins du véhicule tracté peut être fournie, et présente au moins une sortie de commande d'air comprimé (17), à laquelle une pression de commande pour les freins du véhicule tracté peut être fournie, **caractérisé par** une vanne de protection du véhicule tracteur (2) intégrée dans le modulateur de freinage de stationnement (1), dans lequel une conduite d'air comprimé (16) vers ladite au moins une sortie de commande d'air comprimé (17) peut être fermée automatiquement lors d'une chute de pression de la pression de réserve fournie pour le véhicule tracté en dessous d'une valeur de seuil prédéterminée.

2. Modulateur de freinage de stationnement selon la revendication 1, **caractérisé en ce que** la vanne de protection du véhicule tracteur (2) est une vanne de maintien pneumatique (2), qui peut être commutée avec la pression de réserve fournie pour le véhicule tracté et par laquelle la conduite d'air comprimé (16), qui fournit une pression de commande pour les freins du véhicule tracté, vers la sortie (17) du modulateur de freinage de stationnement (1) peut être fermée.

3. Modulateur de freinage de stationnement selon une des revendications 1 ou 2, en particulier selon la revendication 2, **caractérisé en ce que** la conduite de pression de réserve (13) vers le véhicule tracté peut être fermée automatiquement par la pression de réserve fournie par le véhicule tracteur en cas de chute de la pression en dessous d'une valeur de seuil prédéterminée dans le modulateur de freinage de stationnement (1).

4. Modulateur de freinage de stationnement selon l'une quelconque des revendications précédentes, en particulier selon la revendication 3, **caractérisé par** un capteur de pression (42), au moyen duquel une chute de pression de la pression de réserve fournie pour la remorque peut être détectée, dans lequel, au moyen de cette valeur de mesure seule ou de concert avec au moins une autre valeur caractérisant l'état du véhicule, en particulier une opération de freinage, on peut vérifier s'il existe une chute de pression inattendue de la pression de réserve pour la remorque et, en cas de constatation d'une chute de pression inattendue, la pression de réserve pour la remorque peut être fermée automatiquement par la pression de réserve fournie par le véhicule tracteur.

5. Modulateur de freinage de stationnement (1) selon la revendication 4, **caractérisé en ce qu'**une chute de pression inattendue peut être détectée à l'aide d'au moins un gradient de pression temporel et/ou local de la pression de réserve mesurée, dans lequel le gradient de pression peut être déterminé à partir d'au moins deux valeurs de mesure.

6. Modulateur de freinage de stationnement (1) selon l'une quelconque des revendications précédentes, en particulier selon la revendication 5, **caractérisé en ce que** la pression de commande pour le véhicule tracté est modulable dans le modulateur de freinage de stationnement (1) et peut être augmentée au-delà de la pression de commande présente à une entrée de commande d'air comprimé (21, 22) du modulateur de freinage de stationnement (1).

7. Modulateur de freinage de stationnement (1) selon l'une quelconque des revendications précédentes, en particulier selon la revendication 6, **caractérisé par** un dispositif avec une soupape dite Select-High (62), c'est-à-dire une soupape à deux voies avec courant de retour, par laquelle une entrée avec une pression plus élevée parmi des pressions présentes à au moins deux entrées peut être raccordée à une sortie, dans lequel une pression de commande pour le véhicule tracté peut être fournie à la sortie, une entrée peut être raccordée à une entrée de commande d'air comprimé (21, 22) du modulateur de freinage de stationnement (1) pour la pression de commande entrante et une autre entrée peut être raccordée à au moins un système de vanne (12, 71), par lequel une pression peut être modulée et fournie.

8. Modulateur de freinage de stationnement (1) selon l'une quelconque des revendications précédentes, en particulier selon la revendication 7, **caractérisé en ce qu'**un système de vanne (12) peut être commuté alternativement soit pour la modulation de la pression de commande soit pour la modulation de la pression de réserve pour le véhicule tracté.
